# EUROPÄISCHE PATENTSCHRIFT

(11) **EP 2 868 686 B1**
(45) Veröffentlichungstag und Bekanntmachung des Hinweises auf die Patenterteilung: **26.12.2018**
(21) Anmeldenummer: 13191673.6
(22) Anmeldetag: 05.11.2013
(51) Int. Cl.: C08J 3/20, B29C 47/00, B29C 47/10, B29C 47/92, B29C 44/34, B29B 7/48, B29B 7/72, B29B 7/82, B29B 7/88, B29B 9/06

(54) **VERFAHREN UND VORRICHTUNG ZUR HERSTELLUNG EINER ADDITIV- UND TREIBMITTELHALTIGEN POLYMERSCHMELZE**
METHOD AND DEVICE FOR PRODUCING A POLYMER MELT CONTAINING ADDITIVES AND BLOWING AGENTS
PROCÉDÉ ET DISPOSITIF DE FABRICATION D'UNE MASSE FONDUE POLYMÈRE CONTENANT DES ADDITIFS ET DES GONFLANTS

(43) Veröffentlichungstag der Anmeldung: 06.05.2015
(73) Patentinhaber: Coperion GmbH, 70469 Stuttgart (DE)
(72) Erfinder: Metzger, Jörg, 71229 Leonberg (DE); Lechner, Frank, 76131 Karlsruhe (DE); Schönfeld, Sabine, 71679 Asperg (DE)
(74) Vertreter: Rau, Schneck & Hübner Patentanwälte Rechtsanwälte PartGmbB

(56) Entgegenhaltungen:
- EP-A2- 2 062 935
- WO-A1-2009/052898
- DE-A1- 10 342 822
- DE-A1-102004 034 514
- DE-A1-102004 034 516

## Beschreibung

Die Erfindung betrifft ein Verfahren zur Herstellung einer additiv- und treibmittelhaltigen Polymerschmelze, insbesondere einer Polystyrolschmelze. Die Erfindung betrifft ferner eine Vorrichtung zur Herstellung einer additiv- und treibmittelhaltigen Polymerschmelze gemäß dem Oberbegriff des Anspruchs 10.

Aus der WO 2009/052 898 A1 ist ein Verfahren zur Herstellung einer additiv- und treibmittelhaltigen Polymerschmelze bekannt. Die Polymerschmelze wird mittels eines Polymerisationsreaktors bereitgestellt und einer Schneckenmaschine zugeführt. In der Schneckenmaschine werden der Polymerschmelze zunächst mindestens ein Additiv und anschließend mindestens ein Treibmittel beigemischt. Hierzu weist die Schneckenmaschine eine Additiv-Zuführöffnung und eine stromabwärts angeordnete Treibmittel-Zuführöffnung mit zugehörigen Mischzonen zum Einmischen des mindestens einen Additivs bzw. Treibmittels auf. Die additiv- und treibmittelhaltige Polymerschmelze wird anschließend zu expandierfähigem bzw. expandiertem Polymergranulat granuliert. Durch das Einmischen des mindestens einen Additivs und des mindestens einen Treibmittels wird mechanische Energie in die Polymerschmelze eingebracht. Die eingebrachte Energie muss der Polymerschmelze mittels der Schneckenmaschine wieder in aufwendiger Weise entzogen werden, damit die Temperatur der Polymerschmelze unterhalb einer kritischen Zersetzungstemperatur des mindestens einen Additivs bleibt.

Aus der DE 103 42 822 A1 ist ein Verfahren und ein Extruder zum Herstellen von syntaktischem Kunststoff bekannt. Der Extruder weist einen Zuführtrichter auf, durch den aufzubereitender Kunststoff zugeführt wird. In einer Füllstoffzuführzone mündet eine Beschickungsschneckenmaschine in den Extruder. Mittels der Beschickungsschneckenmaschine werden Mikro-Hohlkugeln in die Kunststoffschmelze zugeführt und anschließend eingemischt. In einer anschließenden Vakuum-Entgasungszone mündet eine Rückhalte-Schneckenmaschine in den Extruder. Durch die Rückhalte-Schneckenmaschine tritt trotz eines angelegten Vakuums kein mit MikroHohlkugeln gemischter Kunststoff aus der Vakuum-Entgasungszone aus.

Aus der DE 10 2004 034 516 A1 ist ein Verfahren zur Herstellung von flammgeschütztem, expandierbarem Polystyrol bekannt. Zu einem Hauptstrom einer treibmittelhaltigen Polymerschmelze wird über einen Seitenextruder eine additivhaltige Polymerschmelze zudosiert. Das Additiv ist ein Flammschutzmittel. Die treibmittel- und additivhaltige Polymerschmelze wird anschließend granuliert.

Der Erfindung liegt die Aufgabe zugrunde, ein Verfahren zu schaffen, das in einfacher Weise die Herstellung einer additiv- und treibmittelhaltigen Polymerschmelze ermöglicht.

Diese Aufgabe wird durch ein Verfahren mit den Merkmalen des Anspruchs 1 gelöst. Zur Herstellung einer additiv- und treibmittelhaltigen Polymerschmelze wird mittels einer Schneckenmaschine mindestens ein Additiv in eine erste Polymerschmelze eingemischt, so dass in der Schneckenmaschine eine additivhaltige Polymerschmelze bereitgestellt wird. Das mindestens eine Treibmittel wird außerhalb der Schneckenmaschine, insbesondere mit einer Mischeinrichtung, in eine zweite Polymerschmelze eingemischt, so dass außerhalb der Schneckenmaschine eine treibmittelhaltige Polymerschmelze bereitgestellt wird. Die Polymerschmelzen bestehen insbesondere aus demselben Polymermaterial, insbesondere aus Polystyrol. Die treibmittelhaltige Polymerschmelze wird der additivhaltigen Polymerschmelze, die sich in der Schneckenmaschine befindet, zugeführt. Anschließend werden die treibmittelhaltige Polymerschmelze und die additivhaltige Polymerschmelze mittels der Schneckenmaschine zu der additiv- und treibmittelhaltigen Polymerschmelze gemischt. Die additiv- und treibmittelhaltige Polymerschmelze wird vorzugsweise nach dem Austragen aus der Schneckenmaschine granuliert.

Bei dem erfindungsgemäßen Verfahren wird das Einmischen des mindestens einen Additivs von dem Einmischen des mindestens einen Treibmittels entkoppelt, so dass eine einfachere Einstellung und Überwachung der Temperatur der additivhaltigen bzw. der additiv- und treibmittelhaltigen Polymerschmelze ermöglicht wird. Das Einmischen des mindestens einen Treibmittels in die zweite Polymerschmelze kann ohne Berücksichtigung einer kritischen Zersetzungstemperatur des mindestens einen Additivs erfolgen. Durch das Einmischen des mindestens einen Treibmittels wird die Temperatur und die Viskosität der zweiten Polymerschmelze erniedrigt, wodurch die treibmittelhaltige Polymerschmelze in einfacher Weise in die additivhaltige Polymerschmelze eingemischt werden kann. Insbesondere ist der für das Einmischen erforderliche mechanische Energieeintrag aufgrund der niedrigeren Viskosität reduziert, so dass die Temperatur der additiv- und treibmittelhaltigen Polymerschmelze einfacher unterhalb der kritischen Zersetzungstemperatur gehalten werden kann.

Die treibmittelhaltige Polymerschmelze wird vor der Zuführung in die additivhaltige Polymerschmelze vorzugsweise gekühlt. In die treibmittelhaltige Polymerschmelze kann eine vergleichsweise hohe Kühlleistung eingebracht werden, insbesondere mittels eines Schmelzekühlers. Die Einstellung der Temperatur der additivhaltigen bzw. additiv- und treibmittelhaltigen Polymerschmelze erfolgt bei Bedarf durch Kühlung mittels der Schneckenmaschine. Der Kühlaufwand in der Schneckenmaschine ist aufgrund der Zuführung der vorzugsweise gekühlten treibmittelhaltigen Polymerschmelze in die additivhaltige Polymerschmelze vergleichsweise gering.

Als Polymere bzw. Polymerschmelzen können beispielsweise Polystyrol, Polyethylen, Polypropylen sowie Mischungen dieser Polymere verwendet werden. Weiterhin können auch Polymere auf Basis nachwachsender Rohstoffe, wie beispielsweise Polylactide, sowie abbaufähige Polymere, wie beispielsweise Celluloseacetate, verwendet werden. Als Additive können beispielsweise Flammschutzmittel, Zellmodifikatoren, Grafite, Ruß, Talkum und/oder Farbstoffe in die Polymerschmelze eingemischt werden. Als Treibmittel können Kohlenwasserstoffe, wie beispielsweise Pentan, insbesondere n-Pentan oder iso-Pentan, Alkohole, Kohlendioxid, Stickstoff oder Mischungen dieser Verbindungen in die Polymerschmelze eingemischt werden.

Je nach Wahl des Polymers und des mindestens einen Treibmittels können in Abhängigkeit des Granulierverfahrens sowohl expandierfähige als auch expandierte Polymergranulate hergestellt werden. Zur Herstellung expandierfähiger Polymergranulate kommt bevorzugt eine Unterwassergranulierung zum Einsatz, wohingegen zur Herstellung expandierter Polymergranulate bevorzugt eine Wasserringgranulierung zum Einsatz kommt. Durch das erfindungsgemäße kontinuierliche Verfahren ist die Herstellung von expandierfähigen und/oder bereits expandierten Polymergranulaten mit einem hohen Polymerdurchsatz möglich. Die zweite Polymerschmelze wird vorzugsweise mittels eines Polymerisationsreaktors bereitgestellt und mittels einer Schmelzepumpe einer Mischeinrichtung zugeführt, in der die zweite Polymerschmelze mit dem mindestens einen Treibmittel vermischt wird. Das erfindungsgemäße Verfahren kann auch mit den Merkmalen der Ansprüche 10 bis 15 weitergebildet werden.

Ein Verfahren nach Anspruch 2 gewährleistet eine einfache Herstellung. Die erste Polymerschmelze weist einen ersten Polymer-Gewichtsanteil a₁ auf. Entsprechend weist die zweite Polymerschmelze einen zweiten Polymer-Gewichtsanteil a₂ auf. Eine Summe der Polymer-Gewichtsanteile a₁ und a₂ ergibt einen Polymer-Gewichtsanteil a_{S} der additiv- und treibmittelhaltigen Polymerschmelze. Es gilt somit: a₁ + a₂ = a_{S}. Für das Verhältnis a₂ / a₁ gilt somit: a₂ / a₁ > 3 / 2, insbesondere a₂ / a₁ > 7 / 3, und insbesondere a₂ / a₁ > 4. Das mindestens eine Additiv wird somit in den wesentlich kleineren Gewichtsanteil a₁ eingemischt, wohingegen das mindestens eine Treibmittel in den größeren Gewichtsanteil a₂ eingemischt wird. Der Gewichtsanteil a_{S} definiert die gesamte Polymerschmelze ohne das mindestens eine Additiv und ohne das mindestens eine Treibmittel. Dadurch, dass das mindestens eine Additiv in den kleineren Gewichtsanteil a₁ eingemischt wird, ist die Begrenzung der Temperatur der additivhaltigen Polymerschmelze unterhalb einer kritischen Zersetzungstemperatur vergleichsweise einfach. Insbesondere ist ein vergleichsweise geringer Kühlaufwand erforderlich. Der mechanische Energieeintrag beim Einmischen der treibmittelhaltigen Polymerschmelze ist aufgrund der vergleichsweise niedrigen Viskosität gering, so dass beim Einmischen eine vergleichsweise geringe Kühlleistung zu erbringen ist, um die Temperatur der additiv- und treibmittelhaltigen Polymerschmelze unterhalb einer kritischen Zersetzungstemperatur zu halten. Für den Polymer-Gewichtsanteil der ersten Polymerschmelze a₁ gilt insbesondere: a₁ < 0,3·a_{S}, und insbesondere a₁ < 0,2·a_{S}.

Ein Verfahren nach Anspruch 3 gewährleistet eine einfache Einmischung des mindestens einen Additivs. Die erste Polymerschmelze wird insbesondere vor der Zugabe des mindestens einen Additivs gekühlt. Die Bereitstellung der ersten Polymerschmelze kann nach unterschiedlichen Verfahren erfolgen. Bei einem ersten Verfahren wird der Schneckenmaschine Polymergranulat zugeführt, das in einer Aufschmelzzone vor der Zuführung des mindestens einen Additivs aufgeschmolzen wird. Die erste Polymerschmelze wird in der Aufschmelzzone insbesondere mittels einer Kühleinrichtung gekühlt. Bei einem zweiten Verfahren wird die erste Polymerschmelze einem Polymerisationsreaktor entnommen und mittels einer Schmelzepumpe durch einen Schmelzekühler gefördert und gekühlt. Die gekühlte erste Polymerschmelze wird anschließend der Schneckenmaschine zugeführt und zu der ersten Mischzone gefördert, in der das mindestens eine Additiv eingemischt wird. Bei einem dritten Verfahren wird die bereitgestellte treibmittelhaltige Polymerschmelze in einen ersten Teilstrom und einen zweiten Teilstrom aufgeteilt. Der erste Teilstrom wird mittels einer Schmelzepumpe stromaufwärts einer ersten Mischzone, in der das mindestens eine Additiv eingemischt wird, der Schneckenmaschine zugeführt. Der erste Teilstrom wird in der Schneckenmaschine entgast, vorzugsweise durch eine Rückwärtsentgasung, so dass das eingemischte mindestens eine Treibmittel entweicht und die treibmittelfreie erste Polymerschmelze bereitgestellt wird. Die Temperatur der ersten Polymerschmelze wird vorzugsweise mittels eines Temperatursensors gemessen und von einer Steuereinrichtung überwacht. Für die Temperatur T₁ der ersten Polymerschmelze gilt insbesondere: T₁ < 175 °C, und insbesondere T₁ < 165 °C.

Ein Verfahren nach Anspruch 4 gewährleistet ein einfaches Einmischen des mindestens einen Additivs. Zur Ausbildung der ersten Stauzone weist die mindestens eine Behandlungselement-Welle mindestens ein Stauelement auf. Das mindestens eine Stauelement ist derart ausgebildet, dass dessen Förderrichtung entgegengesetzt zu der Förderrichtung der Schneckenmaschine verläuft. Hierdurch wird die erste Polymerschmelze in der ersten Stauzone gestaut, so dass eine Schmelzedichtung ausgebildet wird. Durch die Schmelzedichtung wird verhindert, dass flüchtige Bestandteile der additivhaltigen Polymerschmelze stromaufwärts strömen. Insbesondere wird durch die Schmelzedichtung ein einfaches Entgasen der additivhaltigen Polymerschmelze gewährleistet, da die stromaufwärts einer Entgasungsöffnung ausgebildete erste Stauzone ein Entweichen der flüchtigen Bestandteile durch die Entgasungsöffnung gewährleistet. Das mindestens eine Additiv ist insbesondere ausgewählt aus der Gruppe Flammschutzmittel, Zellmodifikatoren, Grafite, Ruß, Talkum und/oder Farbstoffe. Für eine kritische Zersetzungstemperatur T_{K} des mindestens einen Additivs gilt insbesondere: T_{K} ≥ 240° C, insbesondere T_{K} ≥ 210° C, und insbesondere T_{K} ≥ 180° C.

Ein Verfahren nach Anspruch 5 gewährleistet ein einfaches Einmischen des mindestens einen Additivs. Flüchtige Bestandteile, die während des Einmischens aus der additivhaltigen Polymerschmelze entweichen, werden durch eine Entgasungsöffnung abgeführt. Die Entgasungsöffnung ist vorzugsweise stromaufwärts einer Zuführöffnung zum Zuführen des mindestens einen Additivs ausgebildet.

Ein Verfahren nach Anspruch 6 gewährleistet eine einfache Herstellung. Während des Einmischens des mindestens einen Additivs überschreitet eine Temperatur der additivhaltigen Polymerschmelze eine kritische Zersetzungstemperatur nicht. Bei Bedarf wird die additivhaltige Polymerschmelze während des Einmischens gekühlt, so dass die durch das Einmischen eingebrachte mechanische Energie nicht zu einer unerwünschten Temperaturerhöhung führt. Zur Kühlung weist die Schneckenmaschine in der Mischzone insbesondere eine Kühleinrichtung auf. Die Temperatur der additivhaltigen Polymerschmelze wird vorzugsweise mittels eines Temperatursensors gemessen und mittels einer Steuereinrichtung überwacht. Für die Temperatur T₂ der additivhaltigen Polymerschmelze gilt insbesondere: T₂ < 185 °C, und insbesondere T₂ < 175 °C.

Ein Verfahren nach Anspruch 7 gewährleistet ein einfaches Mischen der treibmittelhaltigen Polymerschmelze und der additivhaltigen Polymerschmelze. Um ein Entweichen des flüchtigen mindestens einen Treibmittels aus der treibmittelhaltigen bzw. der additiv- und treibmittelhaltigen Polymerschmelze zu vermeiden, wird stromaufwärts der Zuführung der treibmittelhaltigen Polymerschmelze in der Schneckenmaschine eine zweite Stauzone aus der additivhaltigen Polymerschmelze erzeugt. Zur Ausbildung der zweiten Stauzone weist die mindestens eine Behandlungselement-Welle mindestens ein Stauelement auf. Das mindestens eine Stauelement weist eine Förderrichtung auf, die entgegengesetzt zu der Förderrichtung der Schneckenmaschine gerichtet ist. Hierdurch wird die additivhaltige Polymerschmelze gestaut, so dass sich in der zweiten Stauzone eine Schmelzedichtung ausbildet. Die Schmelzedichtung gewährleistet, dass das mindestens eine Treibmittel, soweit es beim Mischen der treibmittelhaltigen Polymerschmelze und der additivhaltigen Polymerschmelze entwichen ist, stromaufwärts strömt und aus der Schneckenmaschine durch eine Entgasungsöffnung und/oder Zuführöffnung entweicht.

Ein Verfahren nach Anspruch 8 gewährleistet ein einfaches Mischen der treibmittelhaltigen Polymerschmelze und der additivhaltigen Polymerschmelze. Beim Mischen der treibmittelhaltigen Polymerschmelze und der additivhaltigen Polymerschmelze wird mittels der Schneckenmaschine mechanische Energie eingebracht, die zu einer Temperaturerhöhung führt. Die Temperatur der treibmittelhaltigen Polymerschmelze gewährleistet, dass die Temperatur der additiv- und treibmittelhaltigen Polymerschmelze in der Mischzone - trotz dieser Temperaturerhöhung - eine kritische Zersetzungstemperatur nicht überschreitet. Die Schneckenmaschine weist in der zweiten Mischzone insbesondere eine Kühleinrichtung auf. Die Kühleinrichtung ermöglicht bei Bedarf eine Kühlung der additiv- und treibmittelhaltigen Polymerschmelze, so dass die Temperaturerhöhung aufgrund der eingebrachten mechanischen Energie unterhalb der kritischen Zersetzungstemperatur begrenzt wird. Für die Temperatur T₃ der treibmittelhaltigen Polymerschmelze gilt insbesondere: T₃ < 170 °C, und insbesondere T₃ < 160 °C.

Ein Verfahren nach Anspruch 9 gewährleistet eine einfache Herstellung. Durch eine Kühlung der treibmittelhaltigen Polymerschmelze wird gewährleistet, dass beim Mischen der treibhaltigen Polymerschmelze mit der additivhaltigen Polymerschmelze eine kritische Zersetzungstemperatur T_{K} nicht überschritten wird. Durch das Einmischen mittels der Schneckenmaschine wird mechanische Energie in die additiv- und treibmittelhaltige Polymerschmelze eingebracht, die zu einer Temperaturerhöhung führt. Durch die Kühlung der treibmittelhaltigen Polymerschmelze wird gewährleistet, dass - trotz dieser Temperaturerhöhung - eine Temperatur der additiv- und treibmittelhaltigen Polymerschmelze während und nach dem Einmischen die kritische Zersetzungstemperatur nicht überschreitet. Mittels des Schmelzekühlers kann eine vergleichsweise hohe Kühlleistung in die treibmittelhaltige Polymerschmelze eingebracht werden. Die treibmittelhaltige Polymerschmelze wird insbesondere mittels eines Schmelzekühlers gekühlt.

Die Schneckenmaschine weist in einer zweiten Mischzone zum Mischen der treibmittelhaltigen Polymerschmelze und der additivhaltigen Polymerschmelze insbesondere eine Kühleinrichtung auf. Durch die Kühleinrichtung wird die aufgrund des Einmischens eingebrachte mechanische Energie der additiv- und treibmittelhaltigen Polymerschmelze bei Bedarf zumindest teilweise wieder entzogen. Die Temperatur der additiv- und treibmittelhaltigen Polymerschmelze wird in der zweiten Mischzone vorzugsweise mittels eines Temperatursensors gemessen und mittels einer Steuereinrichtung überwacht.

Der Erfindung liegt ferner die Aufgabe zugrunde, eine Vorrichtung zu schaffen, die eine einfache Herstellung einer additiv- und treibmittelhaltigen Polymerschmelze ermöglicht.

Diese Aufgabe wird durch eine Vorrichtung mit den Merkmalen des Anspruchs 10 gelöst. Die Vorteile der erfindungsgemäßen Vorrichtung entsprechen den bereits beschriebenen Vorteilen des erfindungsgemäßen Verfahrens. Insbesondere kann die erfindungsgemäße Vorrichtung auch mit den Merkmalen der Ansprüche 1 bis 9 weitergebildet werden.

Die Mischeinrichtung mündet durch die dritte Zuführöffnung in die Schneckenmaschine, so dass die bereitgestellte treibmittelhaltige Polymerschmelze in der zweiten Mischzone mit der additivhaltigen Polymerschmelze zu der additiv- und treibmittelhaltigen Polymerschmelze gemischt wird. Mittels der ersten Zuführöffnung wird die erste Polymerschmelze bereitgestellt. Bei einem ersten Verfahren wird hierzu Polymergranulat durch die erste Zuführöffnung in die Schneckenmaschine eingebracht und in einer Aufschmelzzone zu der ersten Polymerschmelze aufgeschmolzen. Bei einem zweiten Verfahren wird durch die erste Zuführöffnung die erste Polymerschmelze zugeführt und in der Schneckenmaschine zu der ersten Mischzone gefördert. Die erste Polymerschmelze wird beispielsweise einem Polymerisationsreaktor entnommen und mittels einer Schmelzepumpe zu der ersten Zuführöffnung gefördert. Vorzugsweise ist zwischen der Schmelzepumpe und der ersten Zuführöffnung ein Schmelzekühler, insbesondere einer statischer Schmelzekühler, angeordnet, der zur Kühlung der ersten Polymerschmelze dient. Bei einem dritten Verfahren wird die mittels der Mischeinrichtung bereitgestellte treibmittelhaltige Polymerschmelze in einen ersten Teilstrom und einen zweiten Teilstrom aufgeteilt. Der erste Teilstrom wird mittels einer Schmelzepumpe durch die erste Zuführöffnung in die Schneckenmaschine gefördert und in einer Einzugszone entgast, also von dem mindestens einen Treibmittel befreit. Durch die Entgasung der treibhaltigen Polymerschmelze wird die erste Polymerschmelze bereitgestellt.

Durch die zweite Zuführöffnung wird das mindestens eine Additiv in die Schneckenmaschine gefördert und in der stromabwärts angeordneten ersten Mischzone mit der ersten Polymerschmelze vermischt. Die Zuführung des mindestens einen Additivs erfolgt vorzugsweise mittels einer Zuführeinrichtung. Die Zuführeinrichtung ist insbesondere als Zuführ-Schneckenmaschine, insbesondere als Zweiwellen-Seitenbeschickungsmaschine, ausgebildet.

Die Schneckenmaschine ist vorzugsweise als gleichsinnig drehende, dicht kämmende Mehrwellen-Schneckenmaschine, insbesondere Zweiwellen-Schneckenmaschine ausgebildet. Die Schneckenmaschine weist insbesondere mindestens eine Kühleinrichtung zur Kühlung der ersten Polymerschmelze und/oder der additivhaltigen Polymerschmelze und/oder der additiv- und treibmittelhaltigen Polymerschmelze auf. Vorzugsweise weist die Schneckenmaschine mindestens einen Temperatursensor zur Messung einer Temperatur der ersten Polymerschmelze und/oder der additivhaltigen Polymerschmelze und/oder der additiv- und treibmittelhaltigen Polymerschmelze auf. Der mindestens eine Temperatursensor ist insbesondere in der ersten Mischzone und/oder der zweiten Mischzone angeordnet. Ferner weist die Schneckenmaschine eine Steuereinrichtung auf, die insbesondere zur Überwachung der Temperatur der ersten Polymerschmelze und/oder der additivhaltigen Polymerschmelze und/oder der additiv- und treibmittelhaltigen Polymerschmelze dient.

Der Schneckenmaschine ist vorzugsweise ein Schmelzekühler zum Kühlen der additiv- und treibmittelhaltigen Polymerschmelze und eine Granuliereinrichtung zum Granulieren der gekühlten additiv- und treibmittelhaltigen Polymerschmelze nachgeordnet. Darüber hinaus ist der Schneckenmaschine vorzugsweise mindestens eine Schmelzepumpe nachgeordnet. Die mindestens eine Schmelzepumpe ist zwischen der Schneckenmaschine und dem Schmelzekühler und/oder zwischen dem Schmelzekühler und der Granuliereinrichtung angeordnet.

Eine Vorrichtung nach Anspruch 11 gewährleistet ein einfaches Einmischen des mindestens einen Additivs. Das mindestens eine erste Stauelement weist eine Förderrichtung auf, die entgegengesetzt zu der Förderrichtung der Schneckenmaschine gerichtet ist. Hierdurch wird die erste Polymerschmelze in der ersten Stauzone gestaut, so dass die erste Polymerschmelze eine Schmelzedichtung ausbildet. Durch die Schmelzedichtung wird verhindert, dass aus der additivhaltigen Polymerschmelze ausgetretene flüchtige Bestandteile stromaufwärts zu der ersten Zuführöffnung strömen. Vorzugsweise weist die Schneckenmaschine stromabwärts des mindestens einen ersten Stauelements eine Entgasungsöffnung auf, durch die die flüchtigen Bestandteile austreten können.

Eine Vorrichtung nach Anspruch 12 gewährleistet ein einfaches Mischen der treibmittelhaltigen Polymerschmelze und der additivhaltigen Polymerschmelze. Das mindestens eine zweite Stauelement weist eine Förderrichtung auf, die entgegengesetzt zu der Förderrichtung der Schneckenmaschine gerichtet ist. Hierdurch wird die additivhaltige Polymerschmelze in einer zweiten Stauzone gestaut, so dass diese stromaufwärts der dritten Zuführöffnung, also zwischen der zweiten Zuführöffnung und der dritten Zuführöffnung, eine Schmelzedichtung ausbildet. Hierdurch wird verhindert, dass aus der treibmittelhaltigen Polymerschmelze ausgetretenes Treibmittel stromaufwärts strömt und durch eine Entgasungsöffnung und/oder eine Zuführöffnung aus der Schneckenmaschine entweicht.

Eine Vorrichtung nach Anspruch 13 gewährleistet ein einfaches Einmischen des mindestens einen Additivs. Flüchtige Bestandteile, die während des Einmischens des mindestens einen Additivs aus der additivhaltigen Polymerschmelze austreten, können in einfacher Weise durch die Entgasungsöffnung entweichen. Die Entgasung ist insbesondere als Rückwärts-Entgasung ausgebildet. Dementsprechend ist die Entgasungsöffnung insbesondere stromaufwärts der zweiten Zuführöffnung angeordnet.

Eine Vorrichtung nach Anspruch 14 gewährleistet auf einfache Weise eine Bereitstellung der treibmittelhaltigen Polymerschmelze. Die zweite Polymerschmelze wird mittels der Polymer-Zuführleitung in den Schmelzekühler gefördert. Hierzu weist die Vorrichtung vorzugsweise eine Schmelzepumpe auf, die zwischen einem Polymerisationsreaktor und dem Schmelzekühler angeordnet ist und die zweite Polymerschmelze aus dem Polymerisationsreaktor in den Schmelzekühler fördert. Die Treibmittel-Zuführleitung dient zur Zuführung des mindestens einen Treibmittels in die zweite Polymerschmelze. Hierzu mündet die Treibmittel-Zuführleitung in die Polymer-Zuführleitung und/oder in den Schmelzekühler. Der Schmelzekühler ist vorzugsweise statisch ausgebildet. Er umfasst insbesondere ein Kühlergehäuse, in dem ein Statik-Mischkörper angeordnet ist. Zum Kühlen der treibmittelhaltigen Polymerschmelze ist das Kühlergehäuse mit einem Kühlelement versehen. Die Mischeinrichtung gewährleistet auf einfache Weise die Bereitstellung der gekühlten treibmittelhaltigen Polymerschmelze. Mittels des Schmelzekühlers kann eine vergleichsweise hohe Kühlleistung in die treibmittelhaltige Polymerschmelze eingebracht werden.

Eine Vorrichtung nach Anspruch 15 gewährleistet in einfacher Weise die Bereitstellung der zweiten Polymerschmelze. Die zweite Polymerschmelze wird der Mischeinrichtung aus dem Polymerisationsreaktor zugeführt. Zur Zuführung ist insbesondere eine Schmelzepumpe zwischen dem Polymerisationsreaktor und der Mischeinrichtung angeordnet, so dass die zweite Polymerschmelze der Mischeinrichtung mit einem hohen Schmelzedruck zugeführt wird. Hierdurch wird eine gute Durchmischung der zweiten Polymerschmelze mit dem mindestens einen Treibmittel gewährleistet.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Darstellung einer Vorrichtung zur Herstellung einer additiv- und treibmittelhaltigen Polymerschmelze gemäß einem ersten Ausführungsbeispiel,
- Fig. 2: einen Querschnitt durch eine Schneckenmaschine entlang der Schnittlinie II-II in Fig. 1,
- Fig. 3: eine schematische Darstellung einer Vorrichtung zur Herstellung einer additiv- und treibmittelhaltigen Polymerschmelze gemäß einem zweiten Ausführungsbeispiel, und
- Fig. 4: eine schematische Darstellung einer Vorrichtung zur Herstellung einer additiv- und treibmittelhaltigen Polymerschmelze gemäß einem dritten Ausführungsbeispiel.

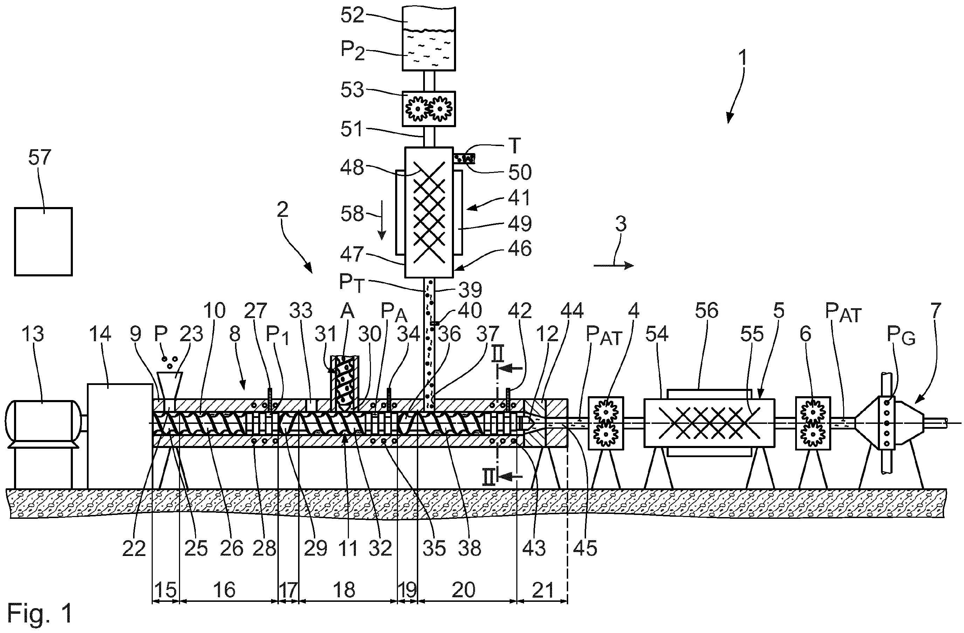

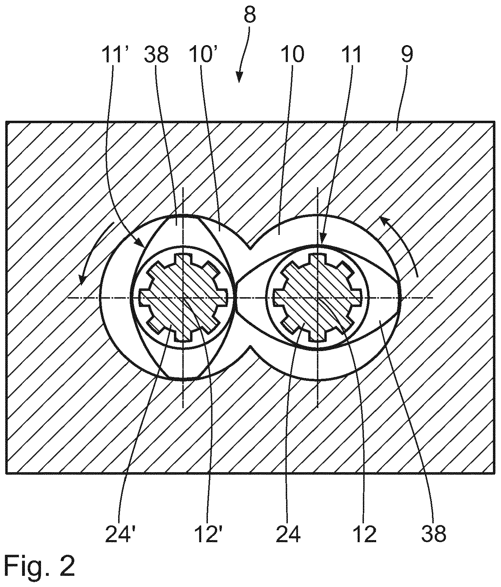

Nachfolgend ist anhand der Fig. 1 und 2 ein erstes Ausführungsbeispiel der Erfindung beschrieben. Fig. 1 zeigt eine Anlage 1 zur Herstellung eines Polymergranulats P_{G}. Die Anlage 1 umfasst eine Vorrichtung 2 zur Herstellung einer additiv- und treibmittelhaltigen Polymerschmelze P_{AT}, der in einer Förderrichtung 3 eine Schmelzepumpe 4, ein statischer Schmelzekühler 5, eine weitere Schmelzepumpe 6 und eine Granuliereinrichtung 7 nachgeordnet ist.

Die Vorrichtung 2 umfasst eine Zweiwellen-Schneckenmaschine 8. Die Schneckenmaschine 8 weist ein Gehäuse 9 auf, in dem zwei einander überlappende Gehäusebohrungen 10, 10' ausgebildet sind, die im Querschnitt die Form einer liegenden Acht haben. In den Gehäusebohrungen 10, 10' sind zwei Behandlungselement-Wellen 11, 11' konzentrisch zu zugehörigen Drehachse 12, 12' angeordnet. Die Behandlungselement-Wellen 11, 11' sind gleichsinnig drehend und dicht kämmend ausgebildet. Der Antrieb der Behandlungselement-Wellen 11, 11' erfolgt mittels eines elektrischen Antriebsmotors 13 über ein Untersetzungs- und Verzweigungsgetriebe 14, das an dem Gehäuse 9 angeflanscht ist. Die Behandlungselement-Wellen 11, 11' weisen Wellen 24, 24' auf, auf denen paarweise nacheinander mehrere Behandlungselemente angeordnet sind. Die Behandlungselemente sind nachfolgend im Einzelnen beschrieben.

Die Schneckenmaschine 8 weist in der Förderrichtung 3 nacheinander eine Einzugszone 15, eine Aufschmelzzone 16, eine erste Stauzone 17, eine erste Mischzone 18, eine zweite Stauzone 19, eine zweite Mischzone 20 und eine Austragszone 21 auf.

In der Einzugszone 15 ist in dem Gehäuse 9 eine erste Zuführöffnung 22 ausgebildet, durch die mittels einer trichterförmigen Materialzuführung 23 ein Polymergranulat P zuführbar ist. In der Einzugszone 15 sind auf den Wellen 24, 24' Schneckenelemente 25 drehfest angeordnet, die das Polymergranulat P in Richtung der Aufschmelzzone 16 fördern.

In der Aufschmelzzone 16 sind auf den Wellen 24, 24' Knet- und/oder Schneckenelemente 26 drehfest angeordnet, die zum Aufschmelzen des Polymergranulats P dienen. Durch das Aufschmelzen wird am Ende der Aufschmelzzone 16 eine erste Polymerschmelze P₁ bereitgestellt. Zur Messung einer Temperatur T₁ der ersten Polymerschmelze P₁ ist in der Aufschmelzzone 16 ein erster Temperatursensor 27 in dem Gehäuse 9 angeordnet. Zudem weist die Schneckenmaschine 8 in der Aufschmelzzone 16 eine erste Kühleinrichtung 28 auf, die als Kühlkanäle in dem Gehäuse 9 ausgebildet ist.

Die erste Stauzone 17 wird durch erste Stauelemente 29 ausgebildet, die drehfest auf den Wellen 24, 24' angeordnet sind. Die ersten Stauelemente 29 weisen eine entgegengesetzt zu der Förderrichtung 3 gerichtete Förderrichtung auf. Hierdurch wird die erste Polymerschmelze P₁ gestaut, wodurch sich eine Schmelzedichtung ausbildet. Die ersten Stauelemente 29 sind insbesondere als Schneckenelemente mit entgegengesetzter Steigung im Vergleich zu den Schneckenelementen 25 ausgebildet.

In der ersten Mischzone 18 ist in dem Gehäuse 9 eine zweite Zuführöffnung 30 ausgebildet, durch die mindestens ein Additiv A zuführbar ist. Die Zuführung des mindestens einen Additivs A erfolgt mittels einer Zuführeinrichtung 31. Die Zuführeinrichtung 31 ist als Schneckenmaschine ausgebildet. Vorzugsweise ist die Zuführeinrichtung 31 eine Zweiwellen-Seitenbeschickungsmaschine. Der Aufbau derartiger Zuführeinrichtungen 31 ist bekannt. Die Zuführeinrichtung 31 mündet durch die zweite Zuführöffnung 30 in die Gehäusebohrungen 10, 10'. Die Zuführeinrichtung 31 fördert das mindestens eine Additiv A in einer Zuführrichtung 58. Zum Einmischen des mindestens einen Additivs A in die erste Polymerschmelze P₁ sind auf den Wellen 24, 24' in der Mischzone 18 Knet- und/oder Schneckenelemente 32 drehfest angeordnet. Durch das Einmischen des mindestens einen Additivs A entsteht eine additivhaltige Polymerschmelze P_{A}. Zum Entgasen flüchtiger Bestandteile, die während des Einmischens aus der additivhaltigen Polymerschmelze P_{A} austreten, ist in der ersten Mischzone 18 in dem Gehäuse 9 eine Entgasungsöffnung 33 ausgebildet. Die Entgasung der additivhaltigen Polymerschmelze P_{A} erfolgt als Rückwärts-Entgasung. Hierzu ist die Entgasungsöffnung 33 zwischen der Stauzone 17 bzw. den Stauelementen 29 und der zweiten Zuführöffnung 30 angeordnet. Zur Messung einer Temperatur T₂ der additivhaltigen Polymerschmelze P_{A} ist in der ersten Mischzone 18 ein zweiter Temperatursensor 34 in dem Gehäuse 9 angeordnet. Zudem weist die Schneckenmaschine 8 in der ersten Mischzone 18 eine zweite Kühleinrichtung 35 auf. Die zweite Kühleinrichtung 35 ist in Form von Kühlkanälen in dem Gehäuse 9 ausgebildet.

In der zweiten Stauzone 19 sind auf den Wellen 24, 24' zweite Stauelemente 36 drehfest angeordnet. Die zweiten Stauelemente 36 weisen entsprechend den ersten Stauelementen 29 eine Förderrichtung auf, die der Förderrichtung 3 entgegengesetzt gerichtet ist. Hierdurch wird die additivhaltige Polymerschmelze P_{A} gestaut, so dass in der zweiten Stauzone 19 eine Schmelzedichtung ausgebildet wird.

In der zweiten Mischzone 20 ist in dem Gehäuse 9 eine dritte Zuführöffnung 37 ausgebildet, die zur Zuführung einer treibmittelhaltigen Polymerschmelze P_{T} dient. Die dritte Zuführöffnung 37 mündet an einem stromaufwärtigen Ende der zweiten Mischzone 20 in die Gehäusebohrungen 10, 10'. Auf den Wellen 24, 24' sind in der zweiten Mischzone 20 Knet- und/oder Schneckenelemente 38 drehfest angeordnet. Mittels der Knet- und/oder Schneckenelemente 38 erfolgt ein Vermischen der additivhaltigen Polymerschmelze P_{A} und der treibmittelhaltigen Polymerschmelze P_{T} in der zweiten Mischzone 20. Zur Messung einer Temperatur T₃ der treibmittelhaltigen Polymerschmelze P_{T} ist in einer Zuführleitung 39 ein dritter Temperatursensor 40 angeordnet. Die Zuführleitung 39 verbindet eine Mischeinrichtung 41 mit der dritten Zuführöffnung 37. Zur Messung einer Temperatur T₄ der additiv- und treibmittelhaltigen Polymerschmelze P_{AT} ist in der zweiten Mischzone 20 ein vierter Temperatursensor 42 in dem Gehäuse 9 angeordnet. Zudem weist die Schneckenmaschine 8 in der zweiten Mischzone 20 eine dritte Kühleinrichtung 43 auf. Die dritte Kühleinrichtung 43 ist in Form von Kühlkanälen in dem Gehäuse 9 ausgebildet.

In der Austragszone 21 weist die Schneckenmaschine 8 eine Düsenplatte 44 mit einer Austragsöffnung 45 auf. Durch die Austragsöffnung 45 ist die additiv- und treibmittelhaltige Polymerschmelze P_{AT} aus der Schneckenmaschine 8 austragbar.

Die Mischeinrichtung 41 dient zum Mischen mindestens eines Treibmittels T und einer zweiten Polymerschmelze P₂. Hierzu weist die Mischeinrichtung 41 einen statischen Schmelzekühler 46 mit einem Kühlergehäuse 47 auf, in dem ein Statik-Mischkörper 48 angeordnet ist. Zum Kühlen der treibmittelhaltigen Polymerschmelze P_{T} ist das Kühlergehäuse 47 mit einem Kühlelement 49 versehen. Zur Zuführung des mindestens einen Treibmittels T mündet eine Treibmittel-Zuführleitung 50 an einem stromaufwärtigen Ende in den Schmelzekühler 46. Ferner mündet an dem stromaufwärtigen Ende eine Polymer-Zuführleitung 51 in den Schmelzekühler 46. Die Polymer-Zuführleitung dient zur Zuführung der zweiten Polymerschmelze P₂.

Zur Bereitstellung der zweiten Polymerschmelze P₂ weist die Vorrichtung 2 einen Polymerisationsreaktor 52 auf, der über eine Schmelzepumpe 53 mit der Mischeinrichtung 41 verbunden ist.

Die Vorrichtung 2 bzw. die Schneckenmaschine 8 ist zur Granulierung der additiv- und treibmittelhaltigen Polymerschmelze P_{AT} mit der Schmelzepumpe 4 und dem statischen Schmelzekühler 5 verbunden. Der statische Schmelzekühler 5 weist entsprechend dem Schmelzekühler 46 ein Kühlergehäuse 54 mit einem Statik-Mischkörper 55 und einem Kühlelement 56 auf. Die gekühlte additiv- und treibmittelhaltige Polymerschmelze P_{AT} ist mittels der Schmelzepumpe 6 zu der Granuliereinrichtung 7 förderbar. Die Granuliereinrichtung 7 ist beispielsweise als Unterwasser-Granuliereinrichtung oder als Wasserring-Granuliereinrichtung ausgebildet. Die Granuliereinrichtung 7 dient zur Herstellung des expandierfähigen oder bereits expandierten Polymergranulats P_{G}.

Zur Steuerung der Anlage 1 bzw. der Vorrichtung 2 ist eine Steuereinrichtung 57 vorgesehen. Die Steuereinrichtung 57 ist insbesondere in Signalverbindung mit der Schneckenmaschine 8 und den zugehörigen Temperatursensoren 27, 34 und 42 sowie mit der Mischeinrichtung 41 und dem Temperatursensor 40.

Die Funktionsweise der Anlage 1 bzw. der Vorrichtung 2 ist wie folgt:
Die erste Polymerschmelze P₁ wird von der Schneckenmaschine 8 bereitgestellt, wohingegen die zweite Polymerschmelze P₂ von dem Polymerisationsreaktor 52 bereitgestellt wird. Die Polymerschmelzen P₁ und P₂ sind insbesondere Schmelzen aus Polystyrol, Polypropylen, Polyethylen, Polylactiden, Celluloseacetaten oder Mischungen dieser Polymere. Die Polymerschmelzen P₁ und P₂ sind aus demselben Polymer oder unterschiedlichen Polymeren erzeugt.

Zur Bereitstellung der ersten Polymerschmelze P₁ wird ein Polymergranulat P, das nicht expandierfähig bzw. expandiert ist, durch die erste Zuführöffnung 22 in die Schneckenmaschine 8 gegeben. Die Zuführung erfolgt beispielsweise mittels einer üblichen Dosiereinrichtung. Das Polymergranulat P wird mittels der Schneckenmaschine 8 von der Einzugszone 15 in die Aufschmelzzone 16 gefördert und dort zu der ersten Polymerschmelze P₁ aufgeschmolzen. Die Temperatur T₁ der ersten Polymerschmelze P₁ wird mittels des Temperatursensors 27 gemessen und von der Steuereinrichtung 57 überwacht. Führt die von der Schneckenmaschine 8 beim Aufschmelzen eingebrachte mechanische Energie zu einer unerwünscht hohen Temperatur T₁ der Polymerschmelze P₁, so steuert die Steuereinrichtung 57 die Kühleinrichtung 28 an. Die Kühleinrichtung 28 begrenzt die Temperatur T₁ der Polymerschmelze P₁ auf einen vorgegebenen Wert. Für die Temperatur T₁ der ersten Polymerschmelze P₁ am stromabwärtigen Ende der Aufschmelzzone 16, also vor dem Zuführen des mindestens einen Additivs A gilt: T₁ < 185°C, insbesondere T₁ < 175°C, und insbesondere T₁ < 165°C. Für einen Schmelzedruck bzw. absoluten Schmelzedruck p₁ der Polymerschmelze P₁ am stromabwärtigen Ende der Aufschmelzzone 16 gilt: p₁ > 5 bar, insbesondere p₁ > 10 bar, und insbesondere p₁ > 15 bar.

Die erste Polymerschmelze P₁ wird in der ersten Stauzone 17 mittels der ersten Stauelemente 29 aufgestaut, so dass eine Schmelzedichtung erzeugt wird. Die in die erste Mischzone 18 geförderte erste Polymerschmelze P₁ wird dort mit mindestens einem Additiv A zu der additivhaltigen Polymerschmelze P_{A} vermischt. Hierzu wird das mindestens eine Additiv A mittels der Zuführeinrichtung 31 durch die zweite Zuführöffnung 30 in die Gehäusebohrungen 10, 10' gefördert. Das mindestens eine Additiv A wird mittels der Knet- und/oder Schneckenelemente 32 in die erste Polymerschmelze P₁ eingemischt. Flüchtige Bestandteile, die während des Einmischens aus der additivhaltigen Polymerschmelze P_{A} austreten, können rückwärts durch die Entgasungsöffnung 33 aus der ersten Mischzone 18 entweichen. Die Temperatur T₂ der additivhaltigen Polymerschmelze P_{A} wird während des Einmischens mittels des Temperatursensors 34 gemessen. Die Steuereinrichtung 57 steuert in Abhängigkeit der gemessenen Temperatur T₂ bei Bedarf die zweite Kühleinrichtung 35 an. Hierdurch wird die Temperatur T₂ auf einen vorgegebenen Wert begrenzt. Für die Temperatur T₂ der additivhaltigen Polymerschmelze P_{A} gilt: T₂ < 195°C, insbesondere T₂ < 185°C, und insbesondere T₂ < 175°C. Für einen Schmelzedruck bzw. absoluten Schmelzedruck p₂ der additivhaltigen Polymerschmelze P_{A} gilt am stromabwärtigen Ende der ersten Mischzone 18 insbesondere: p₂ > 5 bar, insbesondere p₂ > 10 bar, und insbesondere p₂ > 15 bar. Das mindestens eine Additiv A ist insbesondere ausgewählt aus der Gruppe: Flammschutzmittel, Zellmodifikatoren, Grafite, Ruß, Talkum und Farbstoffe sowie Prozesshilfsmittel. Durch die erste Stauzone 17 wird gewährleistet, dass die flüchtigen Bestandteile durch die Entgasungsöffnung 33 austreten und nicht weiter stromaufwärts strömen.

Die additivhaltige Polymerschmelze P_{A} wird in der zweiten Stauzone 19 mittels der zweiten Stauelemente 36 aufgestaut, so dass eine Schmelzedichtung entsteht. Die Schmelzedichtung verhindert, dass bei dem Mischen der additivhaltigen Polymerschmelze P_{A} und der treibmittelhaltigen Polymerschmelze P_{T} flüchtiges Treibmittel T in der Schneckenmaschine 8 stromaufwärts strömt und durch die zweite Zuführöffnung 30 oder die Entgasungsöffnung 33 unerwünscht entweicht.

Zur Bereitstellung der treibmittelhaltigen Polymerschmelze P_{T} wird mittels der Schmelzepumpe 53 die zweite Polymerschmelze P₂ aus dem Polymerisationsreaktor 52 durch die Polymer-Zuführleitung 51 in die Mischeinrichtung 41 gefördert. Die zweite Polymerschmelze P₂ weist beim Austritt aus dem Polymerisationsreaktor 52 eine Temperatur von höchstens 300°C, insbesondere von höchstens 280°C, und insbesondere von höchstens 260°C auf. Die zweite Polymerschmelze P₂ wird in dem Schmelzekühler 46 mit dem mindestens einen Treibmittel T gemischt. Hierzu wird das mindestens eine Treibmittel T durch die Treibmittel-Zuführleitung 50 an einem stromaufwärtigen Ende des Schmelzekühlers 46 in diesen geleitet. Durch den Statik-Mischkörper 48 erfolgt eine Durchmischung der zweiten Polymerschmelze P₂ und des mindestens einen Treibmittels T, wobei mittels des Kühlelements 49 gleichzeitig eine Kühlung der treibmittelhaltigen Polymerschmelze P_{T} erfolgt. Nach dem Verlassen des Schmelzekühlers 46 wird die Temperatur T₃ der treibmittelhaltigen Polymerschmelze P_{T} mittels des Temperatursensors 40 gemessen. Die Steuereinrichtung 57 steuert in Abhängigkeit der gemessenen Temperatur T₃ das Kühlelement 49 an, so dass die Temperatur T₃ einen vordefinierten Wert einnimmt. Für die Temperatur T₃ gilt unmittelbar vor dem Zuführen bzw. bei dem Zuführen in die Schneckenmaschine 8: T₃ < 180°C, insbesondere T₃ < 170°C, und insbesondere T₃ < 160°C. Für einen Schmelzedruck bzw. absoluten Schmelzedruck p₃ der treibmittelhaltigen Polymerschmelze P_{T} gilt bei dem Zuführen: p₃ > 1 bar, insbesondere p₃ > 3 bar, und insbesondere p₃ > 5 bar.

Das mindestens eine Treibmittel T ist ausgewählt aus der Gruppe Kohlenwasserstoffe, beispielsweise n-Pentan und iso-Pentan, Kohlendioxid, Stickstoff und Mischungen davon. Das mindestens eine Treibmittel T wird in flüssiger und/oder gasförmiger Form zugegeben. Die Zuführung des mindestens einen Treibmittels T führt zu einer Reduzierung der Viskosität und der Temperatur der zweiten Polymerschmelze P₂. Hierdurch wird das Einmischen des mindestens einen Treibmittels T in der Mischeinrichtung 41 vereinfacht.

Die treibmittelhaltige Polymerschmelze P_{T} wird durch die dritte Zuführöffnung 37 an einem stromaufwärtigen Ende der zweiten Mischzone 20 in die Gehäusebohrungen 10, 10' zugeführt. Mittels der Knet- und/oder Schneckenelemente 38 werden die additivhaltige Polymerschmelze P_{A} und die treibmittelhaltige Polymerschmelze P_{T} gemischt. Flüchtiges Treibmittel T, das beim Mischen aus der treibmittelhaltigen Polymerschmelze P_{T} austritt, kann aufgrund der in der zweiten Stauzone 19 ausgebildeten Schmelzedichtung nicht stromaufwärts strömen und entweichen. Die Temperatur T₄ der additiv- und treibmittelhaltigen Polymerschmelze P_{AT} wird mittels des Temperatursensors 42 gemessen. Die Steuereinrichtung 57 steuert in Abhängigkeit der gemessenen Temperatur T₄ bei Bedarf die dritte Kühleinrichtung 43 an. Die Kühleinrichtung 43 entzieht der additiv- und treibmittelhaltigen Polymerschmelze P_{AT} die beim Mischen eingebrachte mechanische Energie zumindest teilweise, so dass die Temperatur T₄ in der zweiten Mischzone 20 auf einen vordefinierten Wert begrenzt wird. Für die Temperatur T₄ gilt insbesondere: T₄ < 240°C, insbesondere T₄ < 210°C, und insbesondere T₄ < 180°C. Für einen Schmelzedruck bzw. absoluten Schmelzedruck p₄ der additiv- und treibmittelhaltigen Polymerschmelze P_{AT} gilt am stromabwärtigen Ende der zweiten Mischzone 20: p₄ > 25 bar, insbesondere p₄ > 30 bar, und insbesondere p₄ > 35 bar.

Die Polymerschmelze P_{AT} wird durch die Austragsöffnung 45 aus der Schneckenmaschine 8 ausgetragen. Nach dem Austragen aus der Schneckenmaschine 8 wird die Polymerschmelze P_{AT} mittels der Schmelzepumpe 4 mit einem Druck von 70 bis 300 bar in den statischen Schmelzekühler 5 gefördert. Durch den Schmelzekühler 5 wird die Polymerschmelze P_{AT} gekühlt, so dass die gekühlte Polymerschmelze P_{AT} nach dem Schmelzekühler 5 eine Temperatur von weniger als 190°C, insbesondere von weniger als 180°C, und insbesondere weniger als 170°C aufweist. Durch die Kühlung wird die Viskosität der Polymerschmelze P_{AT} wieder erhöht, also der Viskositätsabfall aufgrund des mindestens einen zugegebenen Treibmittels T zumindest teilweise wieder ausgeglichen. Nach dem Verlassen des Schmelzekühlers 5 wird die gekühlte Polymerschmelze P_{AT} mittels der Schmelzepumpe 6 mit einem Druck von 70 bis 300 bar der Granuliereinrichtung 7 zugeführt und in üblicher Weise granuliert, so dass aus der Polymerschmelze P_{AT} ein Polymergranulat P_{G} erzeugt wird. Je nach Wahl der Polymerschmelzen P₁ und P₂ und des mindestens einen Treibmittels T können in Abhängigkeit des Granulierverfahrens sowohl expandierfähige als auch expandierte Polymergranulate P_{G} hergestellt werden. Zur Herstellung expandierfähiger Polymergranulate P_{G} kommt vorzugsweise eine Unterwassergranulierung zum Einsatz, wohingegen zur Herstellung expandierter Polymergranulate P_{G} bevorzugt eine Wasserringgranulierung zum Einsatz kommt.

Die additiv- und treibmittelhaltige Polymerschmelze P_{AT} hat einen Polymer-Gewichtsanteil a_{S}. Der Polymer-Gewichtsanteil a_{S} setzt sich zusammen aus einem ersten Polymer-Gewichtsanteil a₁ der ersten Polymerschmelze P₁ und einem zweiten Polymer-Gewichtsanteil a₂ der zweiten Polymerschmelze P₂. Es gilt somit: a_{S} = a₁ + a₂. Für den ersten Polymer-Gewichtsanteil a₁ der ersten Polymerschmelze P₁ gilt: a₁ < 0,4 · a_{S}, insbesondere a₁ < 0,3 · a_{S}, und insbesondere a₁ < 0,2 · a_{S}. Für das Verhältnis a₂ / a₁ gilt somit: a₂ / a₁ > 3/2, insbesondere a₂ / a₁ > 7 / 3, und insbesondere a₂ / a₁ > 4. Die erste Polymerschmelze P₁ liefert somit einen kleineren Polymer-Gewichtsanteil a₁ als die zweite Polymerschmelze P₂ mit dem zugehörigen Polymer-Gewichtsanteil a₂. Durch das sukzessive Mischen des mindestens einen Additivs A mit der ersten Polymerschmelze P₁ und der daraus resultierenden additivhaltigen Polymerschmelze P_{A} mit der treibmittelhaltigen Polymerschmelze P_{T} wird die Herstellung der additiv- und treibmittelhaltige Polymerschmelze P_{AT} vereinfacht. Der Schmelzekühler 46 kann vergleichsweise klein ausgelegt werden, da nur der Polymer-Gewichtsanteil a₂ den Schmelzekühler 46 durchströmt.

Mit der erfindungsgemäßen Vorrichtung 2 und dem erfindungsgemäßen Verfahren wird gewährleistet, dass die additivhaltige Polymerschmelze P_{A} bzw. die additiv- und treibmittelhaltige Polymerschmelze P_{AT} während der Herstellung eine kritische Zersetzungstemperatur T_{K} des mindestens einen Additivs A nicht überschreitet. Für die kritische Temperatur T_{K} des mindestens einen Additivs gilt insbesondere: T_{K} ≥ 180°C, insbesondere T_{K} ≥ 210°C, und insbesondere T_{K} ≥ 240°C. Mit der erfindungsgemäßen Vorrichtung 2 wird zudem ein hoher Durchsatz gewährleistet.

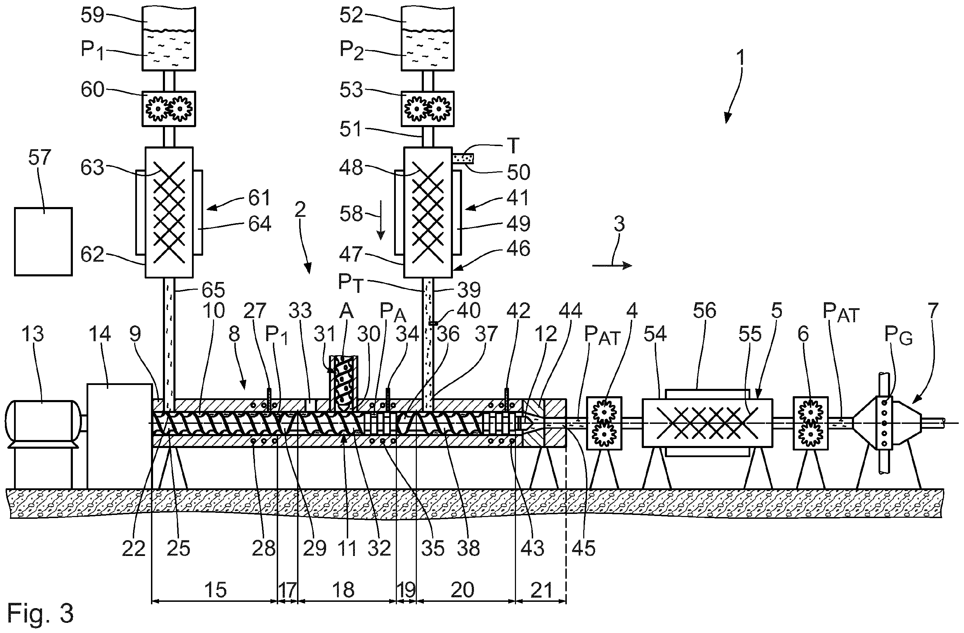

Nachfolgend ist anhand von Fig. 3 ein zweites Ausführungsbeispiel der Erfindung beschrieben. Im Unterschied zu dem ersten Ausführungsbeispiel erfolgt die Bereitstellung der ersten Polymerschmelze P₁ mittels eines Polymerisationsreaktors 59. Die erste Polymerschmelze P₁ wird mittels einer Schmelzepumpe 60 mit einem Druck von 70 bis 300 bar in einen Schmelzekühler 61 gefördert. Der Schmelzekühler 61 ist statisch ausgebildet und weist entsprechend den Schmelzekühlern 5 und 46 ein Kühlergehäuse 62 mit einem Statik-Mischkörper 63 auf. Zur Kühlung der ersten Polymerschmelze P₁ ist ein Kühlelement 64 vorgesehen. Der Schmelzekühler 61 mündet über eine Polymer-Zuführleitung 65 in die erste Zuführöffnung 22. Die Einzugszone 15 erstreckt sich bis zu der ersten Stauzone 17, da ein Aufschmelzen aufgrund der Schmelzezuführung nicht erforderlich ist. Der Temperatursensor 27 und die Kühleinrichtung 28 sind in der Einzugszone 15 angeordnet. Alternativ kann der Temperatursensor 27 auch in der Polymer-Zuführleitung 65 angeordnet sein. Die Kühleinrichtung 28 kann bei ausreichender Kühlung mittels des Schmelzekühlers 61 auch entfallen. Die erste Polymerschmelze P₁ weist nach dem Austritt aus dem Polymerisationsreaktor 59 eine Temperatur von höchstens 300°C, insbesondere von höchstens 280°C, und insbesondere von höchstens 260°C auf. Die erste Polymerschmelze P₁ wird mittels der Schmelzepumpe 60 mit einem Druck von 70 bis 300 bar in den Schmelzekühler 61 gefördert und dort gekühlt. Nach Austritt aus dem Schmelzekühler 61 weist die erste Polymerschmelze P₁ die Temperatur T₁ auf. Für den Schmelzedruck p₁ gilt nach dem Schmelzekühler 61: p₁ > 1 bar, insbesondere p₁ > 3 bar, und insbesondere p₁ > 5 bar. Alternativ können die erste Polymerschmelze P₁ und die zweite Polymerschmelze P₂ auch einem gemeinsamen Polymerisationsreaktor 52 bzw. 59 entnommen werden. In diesem Fall kann die erste Polymerschmelze dem Schmelzekühler 61 und die zweite Polymerschmelze P₂ dem Schmelzekühler 46 auch mit einer gemeinsamen Schmelzepumpe 60 bzw. 53 zugeführt werden. Hinsichtlich des weiteren Aufbaus und der weiteren Funktionsweise der Anlage 1 und der Vorrichtung 2 wird auf das vorangegangene Ausführungsbeispiel verwiesen.

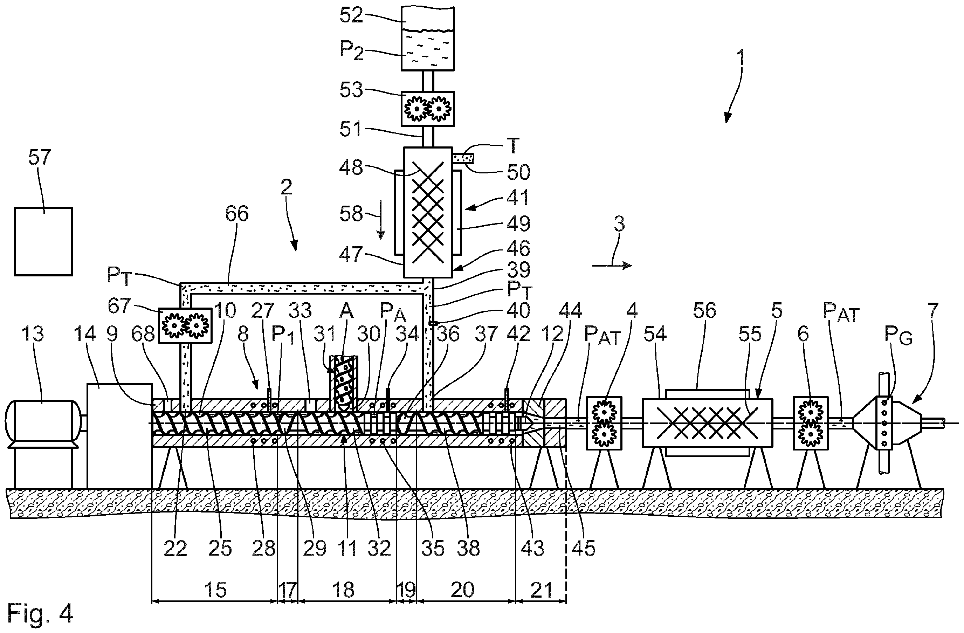

Nachfolgend ist anhand von Fig. 4 ein drittes Ausführungsbeispiel der Erfindung beschrieben. Im Unterschied zu den vorangegangenen Ausführungsbeispielen weist die Vorrichtung 2 eine Zuführleitung 66 auf, die zur Zuführung von treibmittelhaltiger Polymerschmelze P_{T} in die erste Zuführöffnung 22 dient. Die Zuführung erfolgt über eine Schmelzepumpe 67, die in der Zuführleitung 66 angeordnet ist. Die Zuführleitung 66 verläuft ausgehend von dem Schmelzekühler 46 bzw. der Zuführleitung 37 zu der ersten Zuführöffnung 22 und mündet in diese ein. Aufgrund der Schmelzezuführung erstreckt sich die Einzugszone 15 bis zu der ersten Stauzone 17, da eine Aufschmelzung bzw. eine Aufschmelzzone nicht erforderlich ist. Zur Bereitstellung der ersten Polymerschmelze P₁ ist in der Einzugszone 15 eine Entgasungsöffnung 68 in dem Gehäuse 9 ausgebildet. Da das mindestens eine Treibmittel T in der treibmittelhaltigen Polymerschmelze P_{T} flüchtig ist, entweicht dieses aus der treibmittelhaltigen Polymerschmelze P_{T} und tritt durch die Entgasungsöffnung 68 aus. Die Entgasung erfolgt vorzugsweise als Rückwärts-Entgasung. Dementsprechend ist die Entgasungsöffnung 68 stromaufwärts der ersten Zuführöffnung 22 in dem Gehäuse 9 ausgebildet. Am stromabwärtigen Ende der Einzugszone 15 ist das mindestens eine Treibmittel T vollständig entwichen, so dass die erste Polymerschmelze P₁ bereitgestellt wird. Die Kühleinrichtung 28 kann bei ausreichender Kühlung mittels des Schmelzekühlers 46 auch entfallen. Die treibmittelhaltige Polymerschmelze P_{T} wird somit in zwei Teilströme aufgeteilt. Ein erster geringerer Teilstrom wird durch die erste Zuführöffnung 22 gefördert und in der Schneckenmaschine 8 zu der ersten Polymerschmelze P₁ entgast. Der zweite Teilstrom wird entsprechend den vorangegangenen Ausführungsbeispielen durch die dritte Zuführöffnung 37 in die Schneckenmaschine 8 gefördert und dort mit der additivhaltigen Polymerschmelze P_{A} gemischt. Die Entgasung führt zudem zu einer Abkühlung, so dass die erste Polymerschmelze P₁ die Temperatur T₁ aufweist. Hinsichtlich des weiteren Aufbaus und der weiteren Funktionsweise der Anlage 1 und der Vorrichtung 2 wird auf die vorangegangenen Ausführungsbeispiele verwiesen.

Die erfindungsgemäße Vorrichtung 2 bzw. das erfindungsgemäße Verfahren ist einstufig ausgebildet. Aufgrund der einstufigen Ausbildung ist zum Einmischen des mindestens einen Additivs A und des mindestens einen Treibmittels T lediglich eine Schneckenmaschine 8 erforderlich. Aufgrund der getrennten Einmischung des mindestens einen Additivs A und des mindestens einen Treibmittels in die Polymerschmelzen P₁ bzw. P₂ und dem anschließenden Mischen der additivhaltigen Polymerschmelze P_{A} und der treibmittelhaltigen Polymerschmelze P_{T} kann in einfacher und flexibler Weise die additiv- und treibmittelhaltige Polymerschmelze P_{AT} hergestellt werden. Zudem wird ein hoher Durchsatz ermöglicht. Eine Zersetzungstemperatur T_{K} des mindestens einen Additivs A wird von der additivhaltigen Polymerschmelze P_{A} bzw. der additiv- und treibmittelhaltige Polymerschmelze P_{AT} nicht überschritten. Der mechanische Energieeintrag bei der Herstellung der Polymerschmelze P_{AT} ist bei der erfindungsgemäßen Vorrichtung 2 bzw. dem erfindungsgemäßen Verfahren zudem optimiert, so dass auch eine erforderliche Kühlung optimierbar bzw. optimiert ist, um die kritische Zersetzungstemperatur T_{K} nicht zu überschreiten.

## Patentansprüche

1. Verfahren zur Herstellung einer additiv- und treibmittelhaltigen Polymerschmelze, umfassend die folgenden Schritte:
- Bereitstellen einer ersten Polymerschmelze (P₁) und einer zweiten Polymerschmelze (P₂),
- Mischen mindestens eines Additivs (A) mit der ersten Polymerschmelze (P₁) mittels einer Schneckenmaschine (8) zu einer additivhaltigen Polymerschmelze (P_{A}),
- Mischen mindestens eines Treibmittels (T) mit der zweiten Polymerschmelze (P₂) zu einer treibmittelhaltigen Polymerschmelze (P_{T}),
- Zuführen der treibmittelhaltigen Polymerschmelze (P_{T}) in die sich in der Schneckenmaschine (8) befindende additivhaltige Polymerschmelze (P_{A}), und
- Mischen der treibmittelhaltigen Polymerschmelze (P_{T}) und der additivhaltigen Polymerschmelze (P_{A}) mittels der Schneckenmaschine (8) zu einer additiv- und treibmittelhaltigen Polymerschmelze (P_{AT}).

2. Verfahren nach Anspruch 1, **dadurch gekennzeichnet,**
**dass** die additiv- und treibmittelhaltige Polymerschmelze (P_{AT}) einen Polymer-Gewichtsanteil a_{S} hat und für einen Polymer-Gewichtsanteil a₁ der ersten Polymerschmelze (P₁) gilt: a₁ < 0,4·a_{S}.

3. Verfahren nach Anspruch 1 oder 2, **dadurch gekennzeichnet,**
**dass** erste Polymerschmelze (P₁) vor dem Zuführen des mindestens einen Additivs (A) eine Temperatur T₁ aufweist, wobei für die Temperatur T₁ gilt: T₁ < 185 °C.

4. Verfahren nach einem der Ansprüche 1 bis 3, **dadurch gekennzeichnet,**
**dass** vor dem Einmischen des mindestens einen Additivs (A) mittels der Schneckenmaschine (8) eine erste Stauzone (17) aus der ersten Polymerschmelze (P₁) erzeugt wird.

5. Verfahren nach einem der Ansprüche 1 bis 4, **dadurch gekennzeichnet,**
**dass** während des Einmischens des mindestens einen Additivs (A) eine Entgasung der additivhaltigen Polymerschmelze (P_{A}) erfolgt.

6. Verfahren nach einem der Ansprüche 1 bis 5, **dadurch gekennzeichnet,**
**dass** die additivhaltige Polymerschmelze (P_{A}) vor dem Zuführen der treibmittelhaltigen Polymerschmelze (P_{T}) eine Temperatur T₂ aufweist, wobei für die Temperatur T₂ gilt: T₂ < 195 °C.

7. Verfahren nach einem der Ansprüche 1 bis 6, **dadurch gekennzeichnet,**
**dass** nach dem Einmischen des mindestens einen Additivs (A) und vor der Zugabe der treibmittelhaltigen Polymerschmelze (P_{T}) mittels der Schneckenmaschine (8) eine zweite Stauzone (19) aus der additivhaltigen Polymerschmelze (P_{A}) erzeugt wird.

8. Verfahren nach einem der Ansprüche 1 bis 7, **dadurch gekennzeichnet, dass**
die treibmittelhaltige Polymerschmelze (P_{T}) bei dem Zuführen in die Schneckenmaschine (8) eine Temperatur T₃ aufweist, wobei für die Temperatur T₃ gilt: T₃ < 180 °C.

9. Verfahren nach einem der Ansprüche 1 bis 8, **dadurch gekennzeichnet, dass**
die treibmittelhaltige Polymerschmelze (P_{T}) vor dem Zuführen in die Schneckenmaschine (8) gekühlt wird.

10. Vorrichtung zur Herstellung einer additiv- und treibmittelhaltigen Polymerschmelze, umfassend
eine Schneckenmaschine (8) mit
- einem Gehäuse (9),
- mindestens einer in dem Gehäuse (9) ausgebildeten Gehäusebohrung (10, 10'),
- mindestens einer in der Gehäusebohrung (10, 10') angeordneten Behandlungselement-Welle (11, 11'),
- einer in die mindestens eine Gehäusebohrung (10, 10') mündenden ersten Zuführöffnung (22) zum Bereitstellen einer ersten Polymerschmelze (P₁),
- einer in einer Förderrichtung (3) stromabwärts zu der ersten Zuführöffnung (22) angeordneten und in die mindestens eine Gehäusebohrung (10, 10') mündenden zweiten Zuführöffnung (30) zum Zuführen mindestens eines Additivs (A),
- einer ersten Mischzone (18) zum Mischen des mindestens eines Additivs (A) und der ersten Polymerschmelze (P₁) zu einer additivhaltigen Polymerschmelze (P_{A}),
**gekennzeichnet durch**
eine Mischeinrichtung (41) zum Bereitstellen einer treibmittelhaltigen Polymerschmelze (P_{T}) durch Einmischen mindestens eines Treibmittels (T) in eine zweite Polymerschmelze (P₂), wobei
- die Schneckenmaschine (8) eine in der Förderrichtung (3) stromabwärts zu der ersten Mischzone (18) angeordnete und in die mindestens eine Gehäusebohrung (10, 10') mündende dritte Zuführöffnung (37) zum Zuführen der treibmittelhaltigen Polymerschmelze (P_{T}) aufweist und die Mischeinrichtung (41) in die dritte Zuführöffnung (37) mündet,
- die Scheckenmaschine (8) eine zweite Mischzone (20) zum Mischen der treibmittelhaltigen Polymerschmelze (P_{T}) und der additivhaltigen Polymerschmelze (P_{A}) zu einer additiv- und treibmittelhaltigen Polymerschmelze (P_{AT}) aufweist.

11. Vorrichtung nach Anspruch 10, **dadurch gekennzeichnet,**
**dass** die mindestens eine Behandlungselement-Welle (11, 11') zur Ausbildung einer ersten Stauzone (17) aus der ersten Polymerschmelze (P₁) stromaufwärts der zweiten Zuführöffnung (30) mindestens ein erstes Stauelement (29) aufweist.

12. Vorrichtung nach Anspruch 10 oder 11, **dadurch gekennzeichnet,**
**dass** die mindestens eine Behandlungselement-Welle (11, 11') zur Ausbildung einer zweiten Stauzone (19) aus der additivhaltigen Polymerschmelze (P_{A}) zwischen der zweiten Zuführöffnung (30) und der dritten Zuführöffnung (37) mindestens ein zweites Stauelement (36) aufweist.

13. Vorrichtung nach einem der Ansprüche 10 bis 12, **dadurch gekennzeichnet,**
**dass** zwischen dem mindestens einen ersten Stauelement (29) und dem mindestens einen zweiten Stauelement (36) eine Entgasungsöffnung (33) in dem Gehäuse (9) ausgebildet ist.

14. Vorrichtung nach einem der Ansprüche 10 bis 13, **dadurch gekennzeichnet,**
**dass** die Mischeinrichtung (41) umfasst:
- einen Schmelzekühler (46),
- eine Polymer-Zuführleitung (51) zur Zuführung einer zweiten Polymerschmelze (P₂) in den Schmelzekühler (46), und
- eine Treibmittel-Zuführleitung (50) zur Zuführung mindestens eines Treibmittels (T).

15. Vorrichtung nach einem der Ansprüche 10 bis 14, **dadurch gekennzeichnet, dass**
ein Polymerisationsreaktor (52) zur Bereitstellung einer zweiten Polymerschmelze (P₂) vor der Mischeinrichtung (41) angeordnet ist.

## Claims

1. Method for the production of an additive- and blowing agent-containing polymer melt, the method comprising the following steps:
- providing a first polymer melt (P₁) and a second polymer melt (P₂);
- mixing at least one additive (A) with the first polymer melt (P₁) by means of the screw machine (8) to obtain an additive-containing polymer melt (P_{A});
- mixing at least one blowing agent (T) with the second polymer melt (P₂) to obtain a blowing agent-containing polymer melt (P_{T});
- adding the blowing agent-containing polymer melt (P_{T}) to the additive-containing polymer melt (P_{A}) provided in the screw machine (8); and
- mixing the blowing agent-containing polymer melt (P_{T}) and the additive-containing polymer melt (P_{A}) by means of the screw machine (8) to obtain an additive- and blowing agent-containing polymer melt (P_{AT}).

2. Method according to claim 1, **characterized in**
**that** the additive- and blowing agent-containing polymer melt (P_{AT}) has a polymer weight proportion a_{S}, with a polymer weight proportion a₁ of the first polymer melt (P₁) being such that a₁ < 0,4 · a_{S}.

3. Method according to claim 1 or 2, **characterized in**
**that** prior to adding the at least one additive (A), the first polymer melt (P₁) has a temperature T₁, the temperature T₁ being such that T₁ < 185°C.

4. Method according to one of claims 1 to 3, **characterized in**
**that** prior to admixing the at least one additive (A) by means of the screw machine (8), a first accumulation zone (17) is formed of the first polymer melt (P₁).

5. Method according to one of claims 1 to 4, **characterized in**
**that** during admixture of the at least one additive (A), the additive-containing polymer melt (P_{A}) is devolatilized.

6. Method according to one of claims 1 to 5, **characterized in**
**that** prior to adding the blowing agent-containing polymer melt (P_{T}), the additive-containing polymer melt (P_{A}) has a temperature T₂, the temperature T₂ being such that T₂ < 195°C.

7. Method according to one of claims 1 to 6, **characterized in**
**that** after admixing the at least one additive (A) and prior to adding the blowing agent-containing polymer melt (P_{T}), a second accumulation zone (19) is formed of the additive-containing polymer melt (P_{A}) by means of the screw machine (8).

8. Method according to one of claims 1 to 7, **characterized in**
**that** when being fed into the screw machine (8), the blowing agent-containing polymer melt (P_{T}) has a temperature T₃, the temperature T₃ being such that T₃ < 180°C.

9. Method according to one of claims 1 to 8, **characterized in**
**that** the blowing agent-containing polymer melt (P_{T}) is cooled before being fed into the screw machine (8).

10. Device for the production of an additive- and blowing agent-containing polymer melt, the device comprising
a screw machine (8) comprising
- a housing (9);
- at least one housing bore (10, 10') formed in the housing (9);
- at least one treatment element shaft (11, 11') arranged in the housing bore (10, 10');
- a first feed opening (22) opening into the at least one housing bore (22) for providing a first polymer melt (P₁);
- a second feed opening (30) for feeding at least one additive (A), the feed opening (30) being arranged downstream of the first feed opening (22) relative to the direction of conveyance (3) and opening into the at least one housing bore (10, 10');
- a first mixing zone (18) for mixing the at least one additive (A) and the first polymer melt (P₁) to obtain an additive-containing polymer melt (P_{A});
**characterized by**
a mixing device (41) for providing a blowing agent-containing polymer melt (P_{T}) by admixing at least one blowing agent (T) to a second polymer melt (P₂), wherein
- the screw machine (8) has a third feed opening (37) for feeding the blowing agent-containing polymer melt (P_{T}), the third feed opening (37) being arranged downstream of the first mixing zone (18) relative to the direction of conveyance (3) and opening into the at least one housing bore (10, 10), with the mixing device (41) opening into the third feed opening (37);
- the screw machine (8) has a second mixing zone (20) for mixing the blowing agent-containing polymer melt (P_{T}) and the additive-containing polymer melt (P_{A}) to obtain an additive- and blowing agent-containing polymer melt (P_{AT}).

11. Device according to claim 10, **characterized in**
**that** the at least one treatment element shaft (11, 11') has at least one first accumulation member (29) upstream of the second feed opening (30) for forming a first accumulation zone (17) of the first polymer melt (P₁).

12. Device according to claim 10 or 11, **characterized in**
**that** the at least one treatment element shaft (11, 11') has at least one second accumulation member (36) between the second feed opening (30) and the third feed opening (37) for forming a second accumulation zone (19) of the additive-containing polymer melt (P_{A}).

13. Device according to one of claims 10 to 12, **characterized in**
**that** a vent opening (33) is formed in the housing (9) between the at least one first accumulation member (29) and the at least one second accumulation member (36).

14. Device according to one of claims 10 to 13, **characterized in**
**that** the mixing device (41) comprises:
- a melt cooler (46);
- a polymer feed line (51) for feeding a second polymer melt (P₂) to the melt cooler (46); and
- a blowing agent feed line (50) for feeding at least one blowing agent (T).

15. Device according to one of claims 10 to 14, **characterized in**
**that** a polymerization reactor (52) for providing a second polymer melt (P₂) is arranged upstream of the mixing device (41).

## Revendications

1. Procédé de production d'une matière fondue polymère contenant un additif et un propulseur, comprenant les étapes suivantes :
- la mise à disposition d'une première matière fondue polymère (P₁) et d'une deuxième matière fondue polymère (P₂),
- le mélange d'au moins un additif (A) avec la première matière fondue polymère (P₁) au moyen d'une machine à vis sans fin (8) pour donner une matière fondue polymère (P_{A}) contenant un additif,
- le mélange d'au moins un propulseur (T) avec la deuxième matière fondue polymère (P₂) pour donner une matière fondue polymère (P_{T}) contenant un propulseur,
- l'introduction de la matière fondue polymère (P_{T}) contenant un propulseur dans la matière fondue polymère (P_{A}) contenant un additif se trouvant dans la machine à vis sans fin (8), et
- le mélange de la matière fondue polymère (P_{T}) contenant un propulseur et de la matière fondue polymère (P_{A}) contenant un additif au moyen de la machine à vis sans fin (8) pour donner une matière fondue polymère (P_{AT}) contenant un additif et un propulseur.

2. Procédé selon la revendication 1, **caractérisé en ce que** la matière fondue polymère (P_{AT}) contenant un additif et un propulseur a une proportion en poids de polymère aₛ et **en ce que** l'inégalité a₁ < 0,4 aₛ s'applique pour une proportion en poids de polymère a₁ de la première matière fondue polymère (P₁).

3. Procédé selon la revendication 1 ou 2, **caractérisé en ce que** la première matière fondue polymère (P₁) présente une température T₁ avant l'introduction d'au moins un additif (A), l'inégalité : T₁ < 185 °C s'appliquant pour la température T₁.

4. Procédé selon l'une des revendications 1 à 3, **caractérisé en ce que**, avant l'incorporation d'au moins un additif (A), une première zone de bouchon (17) constituée de la première matière fondue polymère (P₁) est produite au moyen de la machine à vis sans fin (8).

5. Procédé selon l'une des revendications 1 à 4, **caractérisé en ce que**, pendant l'incorporation d'au moins un additif (A), un dégazage de la matière fondue polymère (P_{A}) contenant un additif est réalisée.

6. Procédé selon l'une des revendications 1 à 5, **caractérisé en ce que** la matière fondue polymère (P_{A}) contenant un additif présente une température T₂ avant l'introduction de la matière fondue (P_{T}) contenant un propulseur, l'inégalité : T₂ < 195 °C s'appliquant pour la température T₂.

7. Procédé selon l'une des revendications 1 à 6, **caractérisé en ce que**, après l'incorporation du au moins un additif (A) et avant l'addition de la matière fondue polymère (P_{T}) contenant un propulseur, une deuxième zone de bouchon (19) constituée de la matière fondue polymère (P_{A}) contenant un additif est produite au moyen de la machine à vis sans fin (8).

8. Procédé selon l'une des revendications 1 à 7, **caractérisé en ce que**, la matière fondue polymère (P_{T}) contenant un propulseur présente une température T₃ lors de l'introduction dans la machine à vis sans fin (8), l'inégalité : T₃ < 180 °C s'appliquant pour la température T₃.

9. Procédé selon l'une des revendications 1 à 8, **caractérisé en ce que** la matière fondue polymère (P_{T}) contenant un propulseur est refroidie avant l'introduction dans la machine à vis sans fin (8).

10. Dispositif pour la production d'une matière fondue polymère contenant un additif et un propulseur, comprenant
une machine à vis sans fin (8) comportant
- un logement (9),
- au moins une perforation de logement (10, 10') aménagée dans le logement (9),
- au moins un arbre d'élément de traitement (11, 11') disposé dans la perforation de logement (10, 10'),
- une première ouverture d'introduction (22) débouchant dans la au moins une perforation de logement (10, 10') pour la mise à disposition d'une première matière fondue polymère (P₁),
- une deuxième ouverture d'introduction (30) disposée en aval de la première ouverture d'introduction (22) dans un sens de transport (3) et débouchant dans la au moins une perforation de logement (10, 10') pour l'introduction d'au moins un additif (A),
- une première zone de mélange (18) pour le mélange du au moins un additif (A) et de la première matière fondue polymère (P₁) pour donner une matière fondue polymère (P_{A}) contenant un additif,
**caractérisé par**
un appareil de mélange (41) pour la mise à disposition d'une matière fondue polymère (P_{T}) contenant un propulseur par incorporation d'au moins un propulseur (T) dans une deuxième matière fondue polymère (P₂),
- la machine à vis sans fin (8) comportant une troisième ouverture d'introduction (37) disposée en aval de la première zone de mélange (18) dans le sens de transport (3) et débouchant dans la au moins une perforation de logement (10, 10') pour l'introduction de la matière fondue polymère (P_{T}) contenant un propulseur et l'appareil de mélange (41) débouchant dans la troisième ouverture d'introduction (37),
- la machine à vis sans fin (8) comportant une deuxième zone de mélange (20) pour le mélange de la matière fondue polymère (P_{T}) contenant un propulseur et de la matière fondue polymère (P_{A}) contenant un additif pour donner une matière fondue polymère (P_{AT}) contenant un additif et un propulseur.

11. Dispositif selon la revendication 10, **caractérisé en ce que** le au moins un arbre d'élément de traitement (11, 11') comporte au moins un premier élément de bouchon (29) pour la formation d'une première zone de bouchon (17) constituée de la première matière fondue polymère (P₁) en amont de la deuxième ouverture d'introduction (30).

12. Dispositif selon la revendication 10 ou 11, **caractérisé en ce que** le au moins un arbre d'élément de traitement (11, 11') comporte au moins un deuxième élément de bouchon (36) pour la formation d'une deuxième zone de bouchon (19) constituée de la matière fondue polymère (P_{A}) contenant un additif entre la deuxième ouverture d'introduction (30) et la troisième ouverture d'introduction (37).

13. Dispositif selon l'une des revendications 10 à 12, **caractérisé en ce qu'**une ouverture de dégazage (33) est aménagée dans le logement (9) entre le au moins un premier élément de bouchon (29) et le au moins un deuxième élément de bouchon (36).

14. Dispositif selon l'une des revendications 10 à 13, **caractérisé en ce que**
l'appareil de mélange (41) comprend :
- un refroidisseur de matière fondue (46),
- une conduite d'introduction du polymère (51) pour l'introduction d'une deuxième matière fondue polymère (P₂) dans le refroidisseur de matière fondue (46), et
- une conduite d'introduction du propulseur (50) pour l'introduction d'au moins un propulseur (T).

15. Dispositif selon l'une des revendications 10 à 14, **caractérisé en ce que**
un réacteur de polymérisation (52) est disposé avant l'appareil de mélange (41) pour la mise à disposition d'une deuxième matière fondue polymère (P₂).
